# EUROPEAN PATENT APPLICATION

(11) **EP 3 593 687 A1**
(43) Date of publication of application: **15.01.2020**
(21) Application number: 19194444.6
(22) Date of filing: 23.05.2017
(51) Int. Cl.: A47J 43/07, B01F 7/00

(54) **KITCHEN APPLIANCE AND APPARATUS THEREFOR**

(30) Priority: 23.05.2016 GB 201609041; 07.12.2016 GB 201620833
(62) Divisional of application: 17727670.6
(71) Applicant: Kenwood Limited, Havant, Hampshire PO9 2NH (GB)
(72) Inventor: FARAM, David, Havant, Hampshire PO9 2NH (GB); BONNINGTON, Paul, Havant, Hampshire PO9 2NH (GB); FIELDS, Robert, Havant, Hampshire PO9 2NH (GB); CUNNINGHAM, Bradley, Havant, Hampshire PO9 2NH (GB); MORGAN, Shauan Derrick, Havant, Hampshire PO9 2NH (GB); HARVEY, David, Havant, Hampshire PO9 2NH (GB)
(74) Representative: Hector, Annabel Mary

(57) **Abstract**

A kitchen appliance for processing food, comprising: a load sensor 410 for measuring load by means of its deformation, the load sensor 410 supporting the kitchen appliance; and a travel limiter 710 for preventing deformation of the load sensor beyond a pre-determined limit.

## Description

The present invention relates to an apparatus for a kitchen appliance for processing food, said appliance having a motor, and in particular to an apparatus for controlling a kitchen appliance - including for vibration control - and to an apparatus for detecting an attachment. The present invention also relates to a kitchen appliance for processing food.

With existing kitchen appliances for food having an ever-growing array of functions and attachments, the user carries the burden of operating - and knowing how to operate - the kitchen appliance in a safe and effective manner.

In addition, existing kitchen appliances for food produce a certain amount of vibration when mixing, chopping, slicing, kneading, blending, *etc*. as a result of the kinetics of the kitchen appliance and food.

This vibration is at its worst when processing heavy offset loads, such as dough and meat. Such vibration can lead to kitchen appliances 'walking' across a kitchen work surface; this can be hazardous for a user and detrimental to the durability of the kitchen appliance and its components. In addition, excessive vibration can cause undesirable amounts of noise.

As a result, to prevent excessive vibration, restrictions are placed on the design of kitchen appliance tools, and on kitchen appliances themselves, in terms of size, mass and processing speed; this is at the expense of achieving optimal performance of a kitchen appliance.

Using a kitchen appliance for food may often take place with wet and/or dirty hands. To turn on an appliance the user often has to touch a control interface; this makes that area dirty, causing the user to have to clean the area, or leads to other hygiene issues.

Furthermore, there are many different bowls and attachments that can be used in conjunction with kitchen appliances such as food mixers and food processors. In addition, there are many different programs for attachments for such kitchen appliances, and it is the user's responsibility to select the correct program. Incorrect selection may result in unsatisfactory performance and/or damage to the equipment.

Determining which attachments are fitted to a food processor can be achieved via RFID, but this is achieved at a significant cost for the RFID tags and receiving coils. Re-design of all attachments is also required so that the RFID tags are kept dry and insulated from food. All this adds up to an expensive and limited solution.

The present invention is directed at least partially to ameliorate the above-described problems.

According to one aspect of the invention, there is provided an apparatus for a kitchen appliance for processing food, said appliance having a motor, comprising: a sensor for sensing the weight of the kitchen appliance; and a controller for controlling the motor in dependence on the weight sensed by the sensor. Advantageously, the kitchen appliance may be operated automatically and safely based on the weight of the kitchen appliance.

For improved control, preferably, the controller controls the speed of the motor in dependence on the weight sensed by the sensor.

For improved control, preferably, the controller controls the direction of the motor in dependence on the weight sensed by the sensor.

For improved functionality, preferably, the controller controls the motor in dependence on absolute weight and/or on changes in weight as sensed by the sensor.

Preferably, the controller increases the motor output as the absolute weight as sensed by the sensor increases, and decreases the motor output as such sensed weight decreases.

Preferably, the controller controls the motor or in dependence on changes in weight as sensed by the sensor.

Preferably, the controller increases the motor output as change in weight as sensed by the sensor increases, and decreases the motor output as such sensed change in weight decreases.

Preferably, the apparatus further comprises a mechanical actuator for adjusting the flexibility and/or tilt of a tool coupled to the motor, wherein the controller controls the mechanical actuator in dependence on the weight sensed by the sensor. Preferably, the mechanical actuator varies the flexibility of a flexing member comprised within a flexible axle / shaft of a tool. Preferably, the mechanical actuator is a solenoid, linear actuator, electric motor, hydraulic or pneumatic piston, or manual mechanism (e.g., a hand-turned screw). Preferably, tool pitch and tilt may be varied using hinged rotary tools driven by a shaft driven so as to vary their sweep (i.e., moved to incline forwards/backwards in the direction of rotation) by an actuator-rod arrangement to achieve a larger or smaller working area or to bring the blades closer together or further away from each other.

It is desirable to provide rotary tools with varying tilt so as to disrupt standing vortices and move the tools toward food matter co-rotating with the tools. Preferably, the tool is hingedly connected to its rotating axle so as to permit tilting of the tool.

Preferably, the tool is rigid, and more preferably the tool shaft is rigid / inflexible. Preferably, the controller does not adjust the flexibility and/or the tilt of the tool. Preferably, the tilt of the tool is not adjustable. Preferably, the load sensors are only arranged to measure absolute weight. Preferably, the apparatus comprises only one motor, that motor being for transmitting rotary power to the tool. Preferably, the apparatus comprises no mechanical actuator for adjusting the flexibility and/or tilt of a tool.

Preferably, it is desirable to provide an intelligent control system that can respond dynamically to conditions within a food processor to achieve desired food-processing outcomes by dynamically varying the geometry of the rotary tool, including by varying the flexibility of the shaft, the bending/flexing direction of the shaft, tool-pitch, and tool-tilt as disclosed in UK Patent Application No.: 1609041.7, which is herein incorporated by reference in its entirety.

For safety, preferably, the controller is configured to prevent operation of the motor when the weight of the kitchen appliance is less than and/or when the weight of the kitchen appliance is more than a pre-determined level. Preferably, the pre-determined level is within 20%, more preferably within 15%, still more preferably within 10%, and yet more preferably within 5%, of the weight of the kitchen appliance. Preferably, the pre-determined level is less than or equal to (preferably, based on the aforementioned bounds) the weight of the kitchen appliance with or without its tool.

For improved functionality, preferably, the sensor is a weight distribution sensor, and preferably the controller controls the motor in dependence on the weight distribution sensed by the sensor.

To improve processing efficiency and vibration control, preferably, the controller is configured to change the operation of the motor when the sensor senses an uneven weight distribution. Preferably, an uneven weight distribution connotes a load distribution where the difference in load between the region of highest load and the region of lowest load is 20%, more preferably 15%, still more preferably 10%, and yet more preferably 5%.

For effective processing, preferably, the controller is configured to continue operation of the motor until the sensor senses an even distribution of weight, more preferably within margins of error.

For safety, preferably, the controller is configured to prevent operation of the motor when the sensor senses an uneven weight distribution.

Preferably, the controller is configured to change direction and/or speed of the motor when the sensor senses an even weight distribution.

Preferably, the controller is configured to change direction and/or speed of the motor when the sensor senses an uneven weight distribution. Preferably, the direction of the motor is changed so as to move a tool that is coupled to the motor towards the location where an uneven weight is distributed. Preferably, the speed of the motor is increased so as to break up clumped foodstuff. Preferably, the speed of the motor is decreased so as to spread out clustered foodstuff.

Preferably, the extent of the change of operation (e.g. speed) is proportionate to the unevenness of the distribution of load.

For improved accuracy, preferably, the sensor supports the weight of the kitchen appliance.

For improved accuracy, preferably, the controller is arranged to time-average readings from the sensor.

Preferably, the sensor senses weight when the motor is not in operation. Preferably, the sensor continuously senses weight.

Preferably, the sensor is one of: a load cell; a pressure sensor; an inclination sensor; and/or a displacement sensor.

Preferably, the apparatus comprises at least two sensors. As used throughout, term "sensor" when used in the singular preferably refers to any number of sensors, and preferably to a sensor device comprising any number of individual sensors.

For safety, preferably, the apparatus prevents operation of the motor if the load on each sensor is substantially unequal when the motor is not in operation. For safety, the apparatus may therefore prevent operation of the kitchen appliance when it is inclined (preferably, by at least 10 degrees, more preferably by at least 5 degrees, and more preferably still by at least 2.5 degrees).

According to another aspect of the invention, there is provided an apparatus for a kitchen appliance for processing food, said appliance having a motor, comprising: a variable-geometry tool assembly for a kitchen appliance, comprising a rotary tool with at least one tool element and an axle from which the tool derives rotary drive, and at least one of the rotary tool, the tool element, and the axle comprise a configuration the geometry of which is variable during use of the tool; a control element arranged to act upon the variable geometry configuration during use of the tool to constrain the variable geometry; a plurality of sensors for sensing the load distribution of the kitchen appliance; and a controller for controlling the speed of the motor and the control element in dependence on the load distribution sensed by the sensors.

Preferably, the axle comprises a flexing member, and the control element comprises a resilient element configured to bias the flexing member towards the axis of rotation, such as a helical spring surrounding the flexing member.

The resilient element may for example be in the form of a helical spring surrounding the flexing member.

Preferably, at least one of the tilt, sweep, and pitch of the at least one tool element is variable relative to an axis of rotation of the axle, and the control element comprises at least one mechanical actuator.

Preferably, the sensors are pressure pads, for example using force-sensitive resistors.

Preferably, the controller is configured to cease the motor or to switch the motor to a high-speed mode once the load sensors detect an even load, preferably within a given tolerance.

Preferably, with reference to rotational speed, a "high-speed" mode connotes revolutions per minute (RPM) in excess of 120, and more typically around 35,000 RPM.

According to another aspect of the invention, there is provided a kitchen appliance comprising a control system for controlling a variable geometry tool assembly, the control system comprising a processor arranged to receive information, and to operate the control element to act upon the variable geometry configuration in response to the information. The control system can comprise at least one sensor arranged to sense a physical characteristic of at least one of a working medium and the tool assembly, and wherein the processor is arranged to operate the control element in response to information from the at least one sensor. Thus the appliance can respond to stimuli, and adjust the control element if required. Preferably, the physical characteristic is weight and/or weight distribution.

According to a further aspect of the invention, there is provided an apparatus for vibration control in a kitchen appliance for processing food, said appliance having a motor, comprising: a vibration sensor comprising three individual sensors, and preferably the position of the individual sensors is non-collinear. In this way, the efficacy and durability of the kitchen appliance can be improved by controlling vibration.

For improved accuracy, preferably, the vibration sensor comprises at least four individual sensors. Preferably, the individual sensors are provided in the same plane, preferably the plane is horizontal.

For improved accuracy, preferably, the individual sensors are adapted to support the kitchen, preferably at, or adjacent to, its peripheries.

For improved functionality, preferably, the apparatus further comprises a controller for controlling the motor so as to control vibration in dependence on vibrations detected by the vibration sensor.

According to yet another aspect of the invention, there is provided an apparatus for vibration control in a kitchen appliance for processing food, said appliance having a motor, comprising: a vibration sensor for detecting vibration of the kitchen appliance; and a controller for controlling the motor so as to control vibration in dependence on vibrations detected by the vibration sensor. In this way, the vibration behaviour of the kitchen appliance can be managed. The extent of vibration can be regulated to maintain it at a pre-determined level and/or within acceptable / desirable bounds.

For continuous vibration control, preferably, the controller and the vibration sensor are in communication so as to form a feedback loop for controlling the motor so as to control vibration of the kitchen appliance.

Preferably, the controller is for controlling the motor in dependence on vibrations detected by the vibration sensor whereby to reduce vibration of the kitchen appliance, preferably, so as to reduce vibration to a pre-determined level, and more preferably to minimise the vibration. Preferably, the vibration is reduced by reducing or cancelling the driving force of the vibration of the kitchen appliance.

Preferably, the controller is for controlling the motor in dependence on vibrations detected by the vibration sensor whereby to increase vibration of the kitchen appliance, preferably, so as to increase vibration to a pre-determined level, and more preferably so as to maximise vibration. Preferably, this is achieved by driving the motor at (or substantially at) the natural frequency of the vibration of the kitchen appliance.

Preferably, the apparatus is for a kitchen appliance that is free standing. Examples of free standing kitchen appliances for food processing may include: stand mixers; food processors; blenders; meat grinders; and juicers; the same examples may be considered to be counter-top appliances. Preferably, the apparatus is for a counter-top kitchen appliance. Preferably, the term "counter-top" excludes hand-held appliances.

Preferably, the vibration sensor is configured to detect direction of vibration. Preferably, the vibration sensor is configured to detect magnitude of vibration. Preferably, the vibration sensor is configured to detect frequency of vibration. Preferably, the controller controls the torque of the motor in dependence on the vibration detected by the vibration sensor. Preferably, the controller controls the direction of the motor in dependence on the vibration detected by the vibration sensor. Preferably, the controller controls the frequency of rotation of the motor in dependence on the vibrations detected by the vibration sensor.

Preferably, the apparatus further comprises means for adjusting the tilt (for example, an actuator) of a tool driven by the motor controlled by the controller in dependence on the vibrations detected by the vibration sensor.

Preferably, the vibration sensor is suitable for supporting the weight of the kitchen appliance.

Preferably, the controller is arranged to average readings from the vibration sensor, and preferably, to time-average readings.

Preferably, the vibration sensor comprises one of: a load cell; a pressure sensor; an inclination sensor; an accelerometer; and/or a displacement sensor. Preferably, the individual sensors comprise one of: a load cell; a pressure sensor; an inclination sensor; an accelerometer; and/or a displacement sensor.

In a further aspect of the invention, there is provided an apparatus as described above comprising at least two vibration sensors, and more preferably at least four sensors. Preferably, the apparatus is arranged to average readings from at least two vibration sensors.

Preferably, the at least two vibration sensors are in the same plane. Preferably, the plane is horizontal, preferably connoting a plane that is parallel to a surface supporting the (preferably, free-standing) kitchen appliance.

Preferably, the at least two vibration sensors are spaced apart so as to position the at least two vibration sensors at or adjacent to peripheries of the kitchen appliance.

In a further aspect of the invention there is provided a kitchen appliance for processing food, comprising: a load sensor for measuring load by means of its deformation, the load sensor supporting the kitchen appliance; and a travel limiter for preventing deformation of the load sensor beyond a pre-determined limit. In this way, the longevity of the load sensor is improved.

Preferably, the pre-determined level is less than a load at which the load sensor overloads; more preferably, the pre-determined level is 20% less than this load, more preferably still, the pre-determined level is 10% less than the load at which the load sensor overloads, yet more preferably, the pre-determined level is 5% less than the load at which the load sensor overloads. Preferably, the load sensor is a load cell. Preferably, the kitchen appliance comprises at least two load sensors, and more preferably each with its own travel limiter.

Preferably, the travel limiter is fixed relative to the kitchen appliance. Preferably, the load sensor is arranged below the travel limiter. Preferably, the term "below" connotes that the load sensor supports the travel limiter.

Preferably, the travel limiter is spaced apart from the load sensor.

For durability, preferably, the kitchen appliance further comprises means for preventing lateral deformation of the load sensor relative to the travel limiter, more preferably wherein the means couples the load cell to the travel limiter, and still more preferably wherein the means is fastened to the load sensor.

Preferably, the load sensor and the travel limiter each comprise an aperture, and wherein the means for preventing lateral deformation of the load sensor is a pin or bolt that passes through each aperture.

Preferably, the aperture of the load cell and/or travel limiter is oversized relative to the pin or bolt so as not to inhibit deformation of the load cell in the direction of the bolt or pin, and more preferably the direction of the bolt or pin being a vertical direction.

Preferably, the kitchen appliance further comprises a foot fastener for fastening the load cell to a foot for supporting the kitchen appliance, preferably the foot fastener also being the means for preventing lateral deformation of the load cell.

Preferably, the travel limiter forms part of a protective member that is coupled to the kitchen appliance, and preferably the load sensor comprises a fastening for fastening to the protective member.

Preferably, the travel limiter (or protective member) comprises a fastening for fastening to the kitchen appliance. Preferably the travel limiter (or protective member) and its fastening are integral.

Preferably, the kitchen appliance further comprises a foot to which the load sensor is fastened. Preferably, the load sensor has a free end that is fastened to the foot and that supports the kitchen appliance.

For improved durability, preferably, the load cell and the travel limiter each comprise an aperture for receiving the foot fastener thereby to prevent relative movement between the load cell and travel limiter in a direction perpendicular to the foot fastener.

Preferably, the foot fastener comprises a flange for preventing removal of the foot fastener from the travel limiter, and more preferably the flange prevents removal of the foot fastener from the aperture for receiving the foot fastener on the travel limiter.

Preferably, the foot fastener is spaced apart, along the length of the load cell, from the fastener for fastening the load cell to the travel limiter.

Preferably, the travel limiter is a protrusion of the protective member.

Preferably, the protective member comprises a further protrusion distal to the travel limiter.

Preferably, the further protrusion protrudes further than the travel limiter, and more preferably in a downward direction.

Preferably, the further protrusion is in contact with the load cell at a location distal to the travel limiter.

Preferably, the kitchen appliance comprises a foot, and more preferably the foot is fastened to the load sensor by a foot fastener which extends into a through-hole or recess defined in the travel limiter, and wherein the through-hole or recess abuts the foot fastener for preventing deformation of the load sensor other than in a weighing direction.

Preferably, the through-hole or recess is a through-hole, and the foot fastener comprises a flange configured and dimensioned so as to prevent removal of the foot fastener from the through-hole.

Preferably, the load sensor is fastened to only one foot, and more preferably by means only of the means for preventing lateral deformation of the load cell.

In a further aspect of the invention, there is provided an apparatus for detecting an attachment in a kitchen appliance for processing food, comprising: a sensor for sensing the weight of the kitchen appliance; and a controller configured to detect the presence of an attachment in the kitchen appliance in dependence on the weight sensed by the sensor. In this way the safety and the ease of use of the kitchen appliance is improved. The attachment may be a tool and/or a container (*e*.*g*. a bowl).

Preferably, the controller is configured to identify the attachment based on the weight sensed by the sensor.

Preferably, the sensor is a weight distribution sensor, and preferably the controller is configured to detect the presence of an attachment in the kitchen appliance in dependence on the weight distribution.

Preferably, the controller is configured to identify the attachment based on the weight distribution sensed by the sensor.

Preferably, the controller is configured to control the attachment in dependence on whether an attachment is detected. Preferably, the controller is configured to prevent and/or cease operation of the kitchen appliance when an attachment is not detected.

Preferably, the controller is configured to control the attachment in dependence on the type of tool identified. Preferably, the controller is configured to control any of: speed; torque; and direction in dependence on the type of attachment detected.

Preferably, the controller is configured to identify the attachment if it falls within a pre-determined range of weights. Preferably, the pre-determined range of weights being within 15%, more preferably 10%, and yet more preferably within 5%, of the weight of the tool.

Preferably, the size of the pre-determined range is larger for values above the weight of the attachment and smaller for values below the weight of the attachment. Preferably, the range being 5%, more preferably 10%, and yet more preferably 15% larger for values above the weight of the attachment then the bottom end of the range.

Preferably, the controller is arranged to control a safety interlock in dependence on whether an attachment is detected.

In yet another aspect of the invention, there is provided a safety interlock for a kitchen appliance for processing food, having a motor and an attachment for processing food, comprising: a sensor for sensing the weight of the kitchen appliance; a controller configured to control operation of the motor in dependence on the weight sensed by the sensor. A safer kitchen appliance is thereby provided.

Preferably, the controller controls operation of the motor by preventing its operation or transmission of power from the motor to the attachment.

Preferably, the sensor is a weight distribution sensor, and preferably the controller is configured to control operation of the motor in dependence on weight distribution sensed by the sensor

Preferably, the controller prevents operation of the motor if the weight of the kitchen appliance is less than and/or greater than a predetermined level.

Preferably, the controller prevents operation of the motor if the weight distribution of the kitchen appliance is significantly different to a predetermined distribution.

Preferably, the interlock comprises at least two sensors, more preferably the controller is arranged to prevent of the motor if the weight sensed from the at least two sensors substantially differs.

Preferably, data received from the load cells as processed by the controller indicates that a lump of food is either co-rotating with the tool or stationary within the food processor and the controller then causes the tool to tilt (or move bodily) towards the lump to break it up.

The invention comprises a kitchen appliance comprising any of the aforementioned apparatuses (preferably, including the safety interlock).

The invention also provides a computer program and a computer program product for carrying out any of the methods described herein and/or for embodying any of the apparatus features described herein, and a computer readable medium having stored thereon a program for carrying out any of the methods described herein and/or for embodying any of the apparatus features described herein. The invention also provides a signal embodying a computer program for carrying out any of the methods described herein and/or for embodying any of the apparatus features described herein, a method of transmitting such a signal, and a computer product having an operating system which supports a computer program for carrying out any of the methods described herein and/or for embodying any of the apparatus features described herein.

Any apparatus feature as described herein may also be provided as a method feature, and vice versa. As used herein, means plus function features may be expressed alternatively in terms of their corresponding structure, such as a suitably programmed processor and associated memory.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

In this specification the word 'or' can be interpreted in the exclusive or inclusive sense unless stated otherwise.

Furthermore, features implemented in hardware may generally be implemented in software, and vice versa. Any reference to software and hardware features herein should be construed accordingly.

Whilst the invention has been described in the field of domestic food processing and preparation machines, it can also be implemented in any field of use where efficient, effective and convenient preparation and/or processing of material is desired, either on an industrial scale and/or in small amounts. The field of use includes the preparation and/or processing of: chemicals; pharmaceuticals; paints; building materials; clothing materials; agricultural and/or veterinary feeds and/or treatments, including fertilisers, grain and other agricultural and/or veterinary products; oils; fuels; dyes; cosmetics; plastics; tars; finishes; waxes; varnishes; beverages; medical and/or biological research materials; solders; alloys; effluent; and/or other substances.

The invention described here may be used in any kitchen appliance and/or as a standalone device. This includes any domestic food-processing and/or preparation machine, including both top-driven machines (e.g., stand-mixers) and bottom-driven machines (e.g., food processors). It may be implemented in heated and/or cooled machines. The invention may also be implemented in both hand-held (e.g., hand blenders) and tabletop (e.g., blenders) machines. It may be used in a machine that is built-in to a work-top or work surface, or in a stand-alone device. The invention can also be implemented as a stand-alone device, whether motor-driven or manually powered.

One or more aspects will now be described, by way of example only and with reference to the accompanying drawings having like-reference numerals, in which:
Figure 1 is a schematic diagram of an apparatus for reducing vibration in a kitchen appliance;
Figure 2 is a flow diagram of a process for reducing vibration in the kitchen appliance;
Figure 3a is a bottom view of a food processor comprising a load cell;
Figure 3b shows the load cell in detail;
Figure 4 shows a food processor comprising load cells;
Figures 5 schematically show the food processor in various states of use;
Figures 6 schematically show a stand mixer in various states of use;
Figure 7 is a conceptual diagram showing communication between elements of a control system;
Figures 8 are schematic diagrams demonstrating operation of a tool arrangement having variable pitch;
Figures 9 schematically show components of the kitchen appliance; and
Figures 10 show an overload protection mechanism for a kitchen appliance.

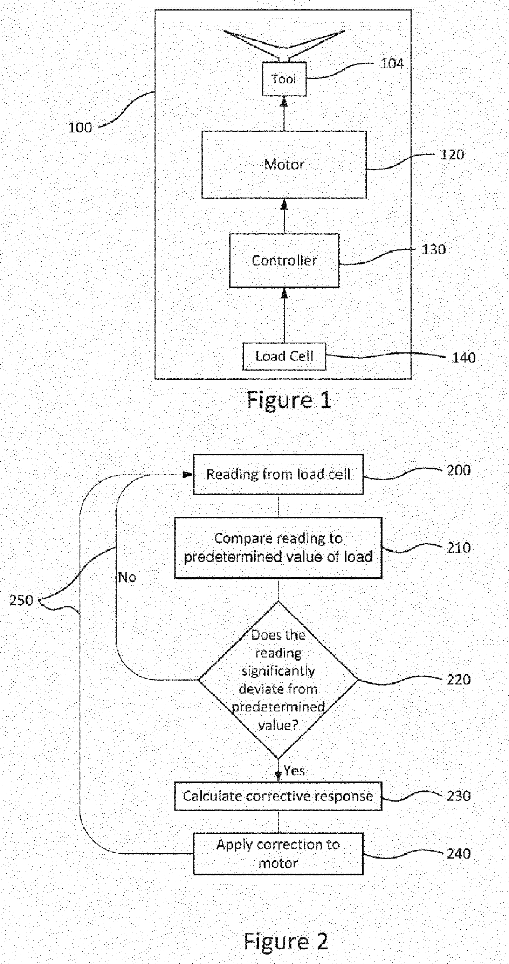

Figure 1 shows a schematic diagram of a kitchen appliance 100 incorporating apparatus for vibration control in the kitchen appliance, in which there is provided an attachable tool 104 for processing food (for example a rotating blade, whisk or mixer) that is driven by a motor 120 with corresponding transmission (not shown) to the tool.

The operation of the motor 120, including its torque, speed, tilt and/or direction of rotation, is controlled by means of a controller 130, for example in the form of a processor, which is in communication with the motor. The controller 130 is also in communication with a sensor 140, in the form of a load cell. The load cell 140 is provided on the base of the kitchen appliance 100 so that it supports the kitchen appliance; in this way, a measure of the weight of the kitchen appliance can be sensed by the load cell.

When the motor 120 is in operation, and in particular when food is being processed by the kitchen appliance 100, there occurs instantaneous variation in the load distribution within the kitchen appliance 100 arising from unbalanced forces from shifting masses in the kitchen appliance. The instantaneous variation in the load distribution may materialise in the form of (forced) vibration (and typically rocking) of the kitchen appliance 100.

With reference to Figures 1 and 2, an apparatus and process for actively reducing vibration in the kitchen appliance is described in more detail.

In a first step 200, a reading is taken from the load cell 140 in order to measure vibration. The load cell 140 then communicates load readings to the controller 130. The controller 130 compares, at a next step 210, load readings from the load cell 140 to a predetermined load value. The predetermined load value is, for example, a pre-specified range of acceptable loads or a measure of load from the load cell 140 when the motor is not in operation (for example, within 20%, preferably within 15%, more preferably within 10%, and still more preferably within 5%, of the load when the motor of the kitchen appliance is at rest). By comparing load from the load cell 140 to the predetermined value, the controller determines whether the extent of deviation from the predetermined load value - and thus whether the vibration - is excessive 220. Next, if the extent of vibration is excessive then a corrective - negative feedback - response to reduce vibration is determined by the controller 130 at a subsequent step 230, which is then communicated to the motor 120 and the corrective response executed in a last step 240. As part of a feedback process, the steps in Figure 2 loop - see step 250 - in order constantly to ensure that the vibration of the kitchen appliance is monitored and managed.

Examples of corrective responses calculated and instructed by the controller in steps 230 and 240 include changes in the torque and/or speed of the motor 120 and/or a change of direction of the motor.

Furthermore, the kitchen appliance 100 comprises a mechanical actuator (not shown) for adjusting the flexibility and/or the tilt of a tool driven by the kitchen appliance.

For example, where it is determined from the load cell 140 that a standing vortex that induces vibration has formed within the kitchen appliance 100, the controller 130 then instructs the tool 104 and/or motor 120 to alter the tilt of the tool so as to dissipate the vortex (and hence vibration).

If the extent of vibration is not excessive, as determined by the controller 130 at step 220, then no corrective response is executed since the vibration is negligible, and the process loops 250 to its initial step 200 to take a further reading from the load cell.

In this way, the cycle of vibration detection, threshold comparison, corrective response calculation and execution (*e*.*g*. motor control) is repeated to regulate the vibration of the kitchen appliance 100 within acceptable and safe bounds.

By actively regulating the vibration of the kitchen appliance 100 a safer appliance can be provided that is more likely to have a longer life-expectancy and that can be more effective at processing food since the restrictions (owing to the need to limit vibration) on tool design and capped motor output are alleviated.

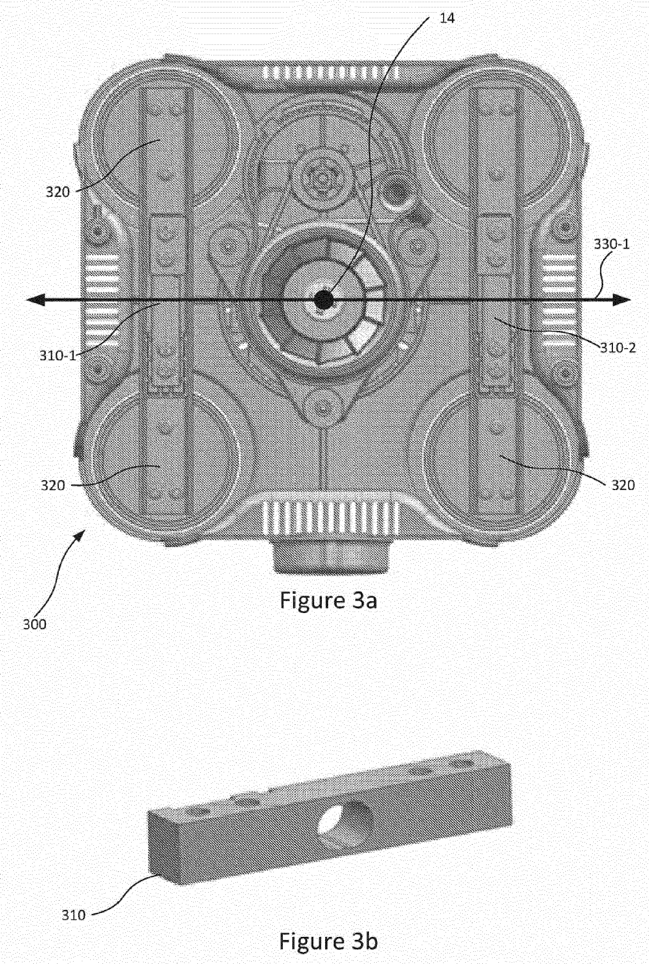

In the example shown in Figure 3a, the kitchen appliance is a food processor 300. The food processor 300 comprises a pair of load cells 310. The load cells 310 (shown in more detail in Figure 3b) take the form of a steel or aluminium weighing bar incorporating a variable-resistance element (such as strain gauge) from which electrical resistance varies with strain applied to the weighing bar. The load cell 310 is fastened to the food processor, on its underside, and also to the supporting feet 320 of the food processor; in this way, the load cell 310 supports the weight of the food processor.

To measure load imbalance laterally across the base of the food processor, the pair of load cells 310 are laterally set apart from one another. Furthermore, to improve accuracy (by increasing magnitude) of load readings, the load cells are provided laterally away from the centre of mass of the food processor, which is achieved in the example shown by providing the load cells towards or adjacent the periphery of the base of the food processor.

By implementing in the food processor of Figure 3a the steps shown in - and described with reference to - Figure 2, lateral vibration, such as side-to-side rocking, can be alleviated as described in more detail below.

When one of the pair of load cells 310-1 reads a load that is significantly higher than the predetermined value for load and/or if the other of the pair of load cells 310-2 reads a value that is significantly lower than the predetermined value for load, then this suggests (and so the controller determines) that the food appliance is displaced in such a way as to suggest that the food processor is rocking from side-to-side. As in Figure 2, the controller therefore applies a correction to generate a cancelling (i.e. destructively interfering) force against the rocking vibration, for example a force in the direction of the other load cell 310-2 at a time when the load on load cell 310-1 is still increasing, or a force in the direction of the load cell 310-1 at a time when the load on load cell 310-2 is decreasing.

With only two load cells, as per the example shown in Figure 3a, vibrations can generally only be sensed on one axis (e.g. laterally) 330-1.

In order to detect vibration in other directions (e.g. other than lateral, side-to-side, rocking) simultaneously and independently, the kitchen appliance is provided with an arrangement of at least three (preferably, non-collinear) load cells.

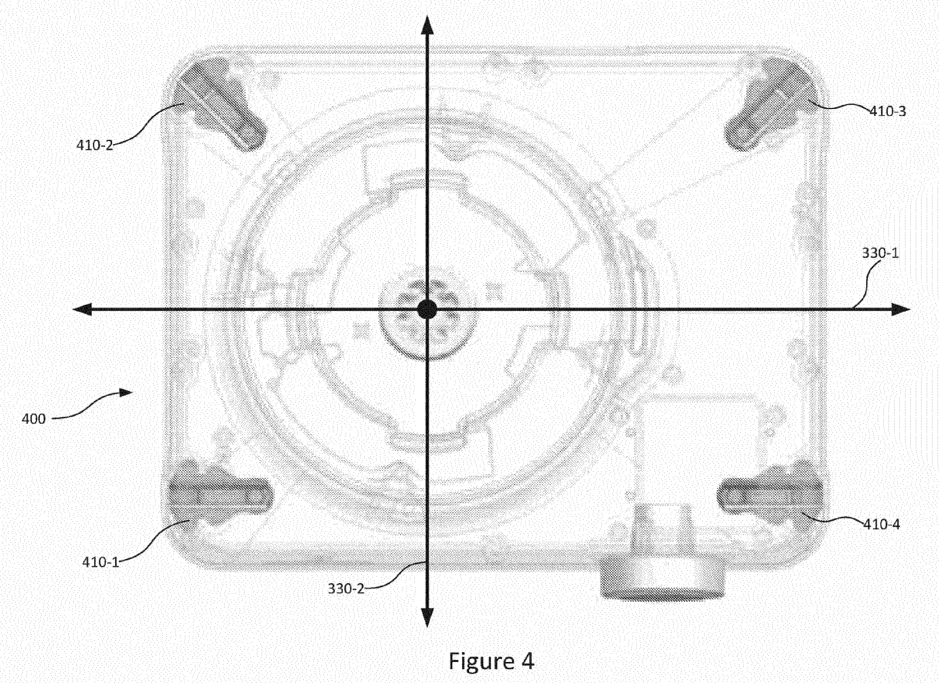

For example, as shown in Figure 4, a food processor 400 is provided with four load cells 410. For the same reasons described above, each load cell is provided at a periphery - specifically, at each corner - of the base of the food processor.

By providing sets of load cells arranged along perpendicular axes 330, the food processor 400 can simultaneously sense both side-to-side (along 330-1) and back-and-forth (along 330-2) vibration. The load cells 410 are arranged in the same horizontal plane.

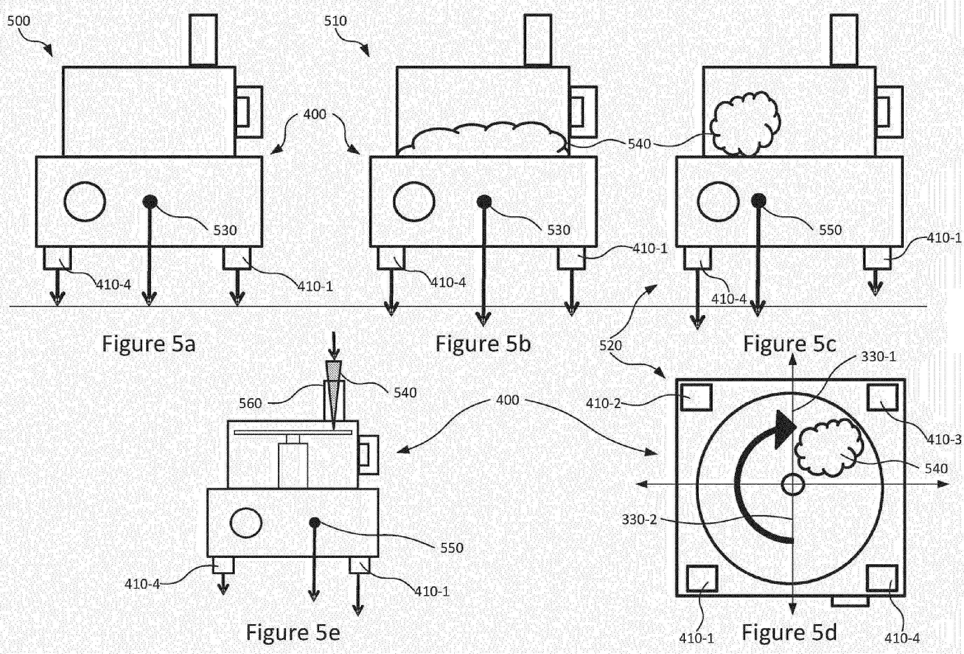

Figures 5 schematically show different scenarios of load distribution in the food processor 400, as sensed by four load cells 410, and the response of the food processor in each scenario.

Generally, changes in the weight or the centre of mass of the food processor measured over time (so, when the food processor is not in a steady state) by the load cells 410 is used to control the food processor in different ways.

Figure 5a shows the food processor 400 in a non-operational (or steady) state and without any foodstuff added 500. In this case, when the food processor is on a level surface, the weight of the food processor will be evenly distributed across the load cells 410 (for example, such that readings across all load cells are within 10%, preferably 5%, and more preferably within 2% of one another). In this way, the status of the machine is derivable from the load cells. For example, when the sum of the load on the load cells is approximately - within error margins (for example, substantially equal to the accuracy of the load cell or of, for example, 15%, preferably 10% and more preferably 5%) - equal to the weight of the food processor (which is pre-recorded in the food processor), the controller determines that the food processor is empty of foodstuff. In addition, when the loads on the load cells are approximately equal (within error margins), the controller determines that the food processor is level. As a safety feature, where it is detected, by means of the load cells, that the food processor is not level, the controller prevents operation of the food processor (and optionally returns, for example via a user interface, a warning to the user). As a yet further example, when the load sensed by the load cells remains substantially constant (for example, within acceptable margins of error, flux and/or noise) as detected by the load cells (individually and/or in total) for a pre-determined time (for example, for at least 1 minute, preferably for at least 30 seconds, more preferably for at least 15 seconds, and more preferably still for at least 5 seconds), the controller determines that the food processor is not in operation (thereby to help detect a fault) and/or that no tool has been attached (based, in conjunction, with the knowledge of the weight of the food processor), from which an appropriate error is indicated (via a user interface) to the user. If not pre-recorded, the controller - via readings from the load cells - determines the centre of mass of the food processor 530.

Figure 5b shows the food processor 400, with foodstuff 540 contained within the food processor, in a non-operational (or steady) state 510. The total weight of the foodstuff added to the food processor is determined by the controller based on: readings from the load cells 410 after the foodstuff is added; and from readings before the foodstuff is added and/or pre-recorded information of the weight of the food processor.

Figures 5c and d show the food processor 400, with foodstuff 540 contained, in which the foodstuff has accumulated to form a mass that is unevenly distributed in the food processor (also referred to as a *"clump"* or a "*lump*")*.*

Where there is an uneven distribution of load, the readings from the plurality of load cells 410 is used (by the controller) to identify the extent to which load is unevenly distributed (for example, the deviation of each loads cell's reading from the mean load on each load cell) and to identify where the load is concentrated.

For example, the single mass of foodstuff 540 concentrates at a rear left-hand side part of the food processor. As a result, the reading from load cells 410-4 and 410-3 will read higher than the situation shown in - and described with reference to - Fig. 5b and higher than loads cell 410-1 and 410-2 (in fact, the readings from load cells 410-3 and 410-1 will be highest and lowest respectively). From the shift in the centre of mass 550 as determined by the controller, the location of the mass that has altered the weight distribution in the food appliance is also determined.

A further characteristic of uneven load distribution as a result of clumped foodstuff is the temporal change in load when the food processor is in operation. As best seen in Fig. 5d, the cluster of foodstuff 540 will typically co-rotate with the rotating tool. The controller determines this from the cyclical pattern of successive load cells (*e*.*g*. 410-2, 410-3 and then 410-4) increasing and then decreasing in load in the same direction in which the tool is rotating and with approximately the same frequency. In this way, uneven load distribution as a result of factors other than foodstuff clumping (e.g. a user resting on the appliance) can be recognised and thus ignored by the controller before taking a response, such as a corrective measure.

In some cases, the clumping together of foodstuff is desirable, for example when mixing flour and water to form dough. In other circumstances, clumping is not desirable, for example when blending and mixing.

As a result, different actions can be taken in response to the detection of an uneven distribution of food. In more detail, the controller is arranged to control processing of foodstuff in dependence on the detection of an uneven distribution of food.

For example, when processing foodstuffs to form dough (as can be recognised from a user input, e.g. the selection of a dough-processing program, or from the detection of a dough hook being attached to the food processor), the motor is stopped (by the controller) when it is detected that the foodstuff has formed a clump since this is indicative that the dough has formed. In addition, the user is alerted (via a user interface, as triggered by the controller) to the fact that the processing of the dough has completed.

In examples where it is desirable to maintain an even distribution of food, the controller controls the food processor so as to redistribute food. Upon detection of an uneven distribution of food (for example, that is beyond an acceptable degree of load distribution), the controller controls the direction, tilt and/or speed of the motor so as to redistribute the food. For example, the motor - and hence the tool - is run in reverse or oscillated back and forth around the location where the uneven distribution is detected until the distribution of food reaches an acceptable level. In addition or alternatively, the speed of the motor - and hence also the tool - is either increased to break up a cluster of food (which may be most appropriate for processing larger particle of cohesive ingredients, such as diced meat) or decreased gently to spread a mixture (for example, cohesive fine particulate foods and viscous emulsions, such as creams and mayonnaise).

Uneven loads of foodstuff tend also to be responsible for causing vibration in such food processors since the uneven load moves around under the force of the tool, thereby also moving the centre of mass of the food processor. Such vibration is generally mitigated as described above.

In more detail, by measuring the change of load on the load cells 410 with time the kinetics (including speed, direction and momentum) of the uneven load of food is computed by the controller and vibration prevented by monitoring the kinetics of the uneven load using readings from the load cell, and then by taking preventative or stabilising action if the kinetics of the uneven load are likely to cause, or are causing, excessive vibration (as determined by comparison with pre-determined acceptable values).

Such preventative and stabilising actions include, for example, stopping the motor or driving / pulsing the motor asynchronously with the oscillations of the food processor.

In an alternative example, where vibration is not a concern and where vibration aids a processing function, the food processor is also arranged to increase vibration, for example by driving the oscillations of the food processor by operating the motor at or around the natural frequency with which the food processor is vibrating (as identified by measuring oscillatory changes in readings from the load cells 410 with time).

Sudden and unexpected changes in load distribution, as measured by the load cells 410, may indicate unsafe operation of the food processor. For example, if changes in load distribution stop suddenly and unexpectedly, then this may be an indicator of motor stall, tool breakage and/or other damage to the food processor. In such circumstances, as a safety feature, the controller shuts off the food processor (or at least the motor) as a corrective measure.

Figure 5e shows a situation where foodstuff 540 is added, for example, through a feed tube 560 at the top of - and offset from the centre of - the food processor 400 and onto a disc cutter; by doing so, load cells closest to the feed tube (*i.e.* load cells 410-2) may read higher than the load cells that are further from the feed tube (*i.e.* load cells 410-1, 410-4 and 410-2).

As the user pushes foodstuff 540 into the food processor, the centre of mass 550 shifts as the load on load cells 410-1 and 410-2 increases; from this it is detectable when foodstuff is - and is not - being added to the food processor, the food processor is therefore available to be controlled in dependence on such user activity.

For example, the controller is configured to turn the motor on/off and to control the torque and/or speed of the motor (*e*.*g*. for a cutting or mixing function). For energy efficiency, the motor is stopped when it is identified that no foodstuff is being pushed through into the kitchen appliance (*e.g*. signalled by a decrease in load on load cells 410-1 and 410-2); the motor is re-started when the addition of foodstuff is detected.

The force with which a user pushes foodstuff into the kitchen appliance is detected by the load cells 410; this information is used by the controller to control the motor.

For example, if food is input by a user with high force, then the motor torque and/or speed is increased. Furthermore, as a training guide/user feedback tool the food processor indicates to the user (via a user interface) if the force with which foodstuff is being added is too great (*e.g.* if the force exceeds a predetermined value or if an excess amount of torque for the motor is required). The user is therefore coached by the food processor not to press too hard, since doing so can result in sub-optimal performance of the food processor, and possible damage also.

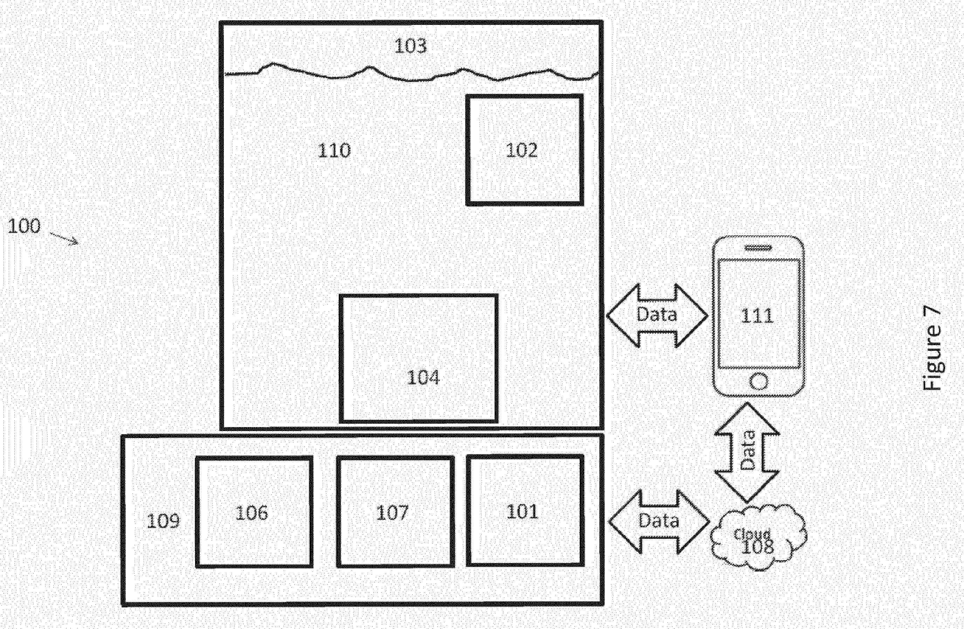

Figures 7 schematically show different states of a kitchen appliance in the form of a stand mixer 600 incorporating load cells 410.

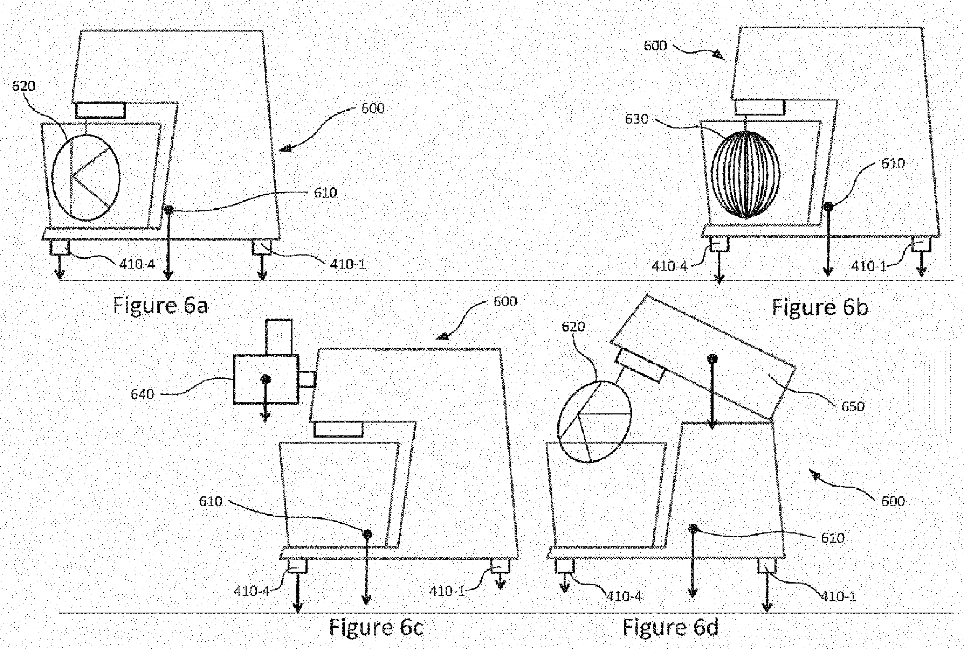

In more detail, Figure 6a shows a stand mixer 600, provided with load cells 410 on its base, in a non-operational (and steady) state. The stand mixer comprises an attachable tool, shown as a rigid beater 620.

Using the load cells 410, the centre of mass 610 of the stand mixer 600 (including or excluding the tool 620) is derived by the controller, as is the total weight of the stand mixer and its contents. Accordingly, the stand mixer is operated by the controller in dependence on the readings form the load cells 410 as outlined above.

In addition to the stand mixer being able to detect the presence and absence of an attachment, the stand mixer is also able to identify which tool has been attached by means of the load cells 410 and the "load fingerprint" of each attachment.

Figure 6b shows the stand mixer 600 with a whisk 630 attached. The whisk 630 and beater 620 have different masses and mass distributions. As a result, the total load, as well as its distribution, sensed by the load cells 410 is different when the whisk 630 is attached compared to that when the beater 620 is attached.

In yet another example, Figure 6c shows the stand mixer 600 with an attachment connected to a front drive of the stand mixer, such as a meat grinder 640. Compared to the beater 620 and whisk 630, the attachment 640 has its own characteristic mass and effect on weight distribution - "load fingerprint" - when it is connected to the stand mixer.

By being able to distinguish between tools, the stand mixer 600 is operated by the controller automatically in accordance with the type of attachment fitted. For example, a dough hook is driven at a low speed, whereas a beater is driven at higher speeds.

Food processing attachments can often end up with food stuck to them during use. As a result, when identifying a tool, the controller compares the readings form the load cells 410 to pre-recorded load fingerprints, which include weight bands (for example, of ±15%, preferably ±10%, and more preferably ±5% of the true weight of the tool) assigned to each tool to account for errors in readings and to allow for additional weight on the tool in the form of food stuck to the tool.

To ensure that different tools can be identified, load fingerprints are unique to a given type of tool, as part of this the weight band of different tools do not overlap. To help achieve this, in some cases different types of tools are made heavier or lighter than normal to ensure that the weight bands are wide enough to be read within reasonable bounds of error, including where a reasonable amount of food remains on the tool.

Changes in total weight of the stand mixer is used by the controller to determine which tool is fitted, which can then be used to determine the appropriate motor speed and/or to select an appropriate program either on the machine or using an application for devices (such as a mobile phone) in communication with the stand mixer.

For consistency, the user is guided (via the stand mixer or via a peripheral device - such as a mobile phone - in communication with the stand mixer) to ensure that stand mixer is in a particular state (e.g. not in operation, with the head unit 650 raised and/or without a bowl) when taking readings to identify a tool.

Figure 6d shows the stand mixer 600 with a tool attached and the head unit 650 of the stand mixer in a raised position. When the head unit 650 is raised the weight distribution across the load cells 410 changes (with load increasing towards the rear load cells, including load cell 410-1), but overall load remains the same; from this, the controller determines, by means of the load cells 410, when the head unit is raised, and when it is lowered. In this way, the controller controls a safety interlock so as only to operate the motor when the head unit 650 is in the lowered position, and to cut off the motor as it is being raised. Furthermore, detection of the position of the head unit in this way is also used for program selection either directly on the machine or via an application on another device in communication with the stand mixer.

Figure 7 shows a control system for automatically controlling an appliance 100 including a processor 101 which is in electronic communication with one or more sensors 102 which monitor conditions within a food processing container 103. Within the container 103 a rotary tool 104 is located for processing material to be processed 110 (i.e., a working medium such as a beverage or food). Variable geometry of the rotary tool 104 including at least one of shaft flexibility, tool-pitch, tool-tilt, bending/flexing direction is controlled by actuator 105, which is also in electronic communication with, and automatically controlled by, the processor 101. More than one actuator 105 may be present. A user interface 106 for allowing user-input and displaying feedback to the user (either remotely as in a mobile electronic device, or as a built-in user-interface) is also in electronic communication with the processor 101. Processor 101 communicates electronically with memory 107, from which it can load food-processing programs, food data, and sensor feedback processing logic, and in which it can store feedback received from the sensors 102. Processor 101 is also in electronic communication with cloud service 108 and mobile device 111 which provide additional database and/or processing support and to which it can transmit feedback data received from the sensors 102.

Processor 101, memory 107, and user interface 106 may be located in a base unit 109 to which the food processing container 103 is removably attachable. Alternatively one or more of these elements may be located in a mobile device 111 or in a cloud 109. In an additional alternative, one or more of these elements may be included in the food processing container 103, or may be a composite element with functionalities divided between the base unit 109 and the food processing container 103.

Whilst only the actuators 105 and rotary tool 104 are shown here for simplicity, processor 101 may also communicate electronically with and automatically control other food processing components such as are typically found in a food processing appliance. These include heaters for heating the food, lights, interlocks, attachment identification tags, the rotary drive of the rotary tool, gearing controls of the rotary tool, means for bodily moving (in addition to or instead of varying the geometry of) the rotary tool laterally, vertically, or longitudinally (e.g., in a stand-mixer appliance, motors for moving the head from which the tools depend either vertically or horizontally forwards/backwards or side-to-side), and other such means as are necessary to achieve desired food processing results.

The sensors (shown in Figure 7, but preferably also referred to throughout) can include one or more thermometers, visual/IR-wavelength cameras, weight-sensors (these can be located around the base of the food processing container 103 to detect its current balance), rotary tool 104 position sensors, speed sensors detecting the rotational speed and/or direction of rotary tool 104 or a motor of the appliance, stress-gauges located within the rotary tool 104 to detect axial/rotational/radial strains on the tool 104 and its components, pressure-sensors, nutritional sensors, chemical sensors such as pH sensors, food density/viscosity sensors, sound sensors, and other known sensing means for detecting physical characteristics of the working medium 110 or rotary tool 104. Sensors 102 can be located within the food processing container 103, or where remote sensing is possible, outside it (either in the base unit 109, or in the mobile device 111, or in another location). Feedback from the sensors 102 is transmitted electronically to processor 101 where it is suitably processed - for example by performing image-recognition processing on information from a video camera to identify food shapes, locations, and types.

Once processed, the feedback data is then used by the processor 101 as an input to a food processing program running on the processor 101 which analyses whether the feedback data meets a desired food or tool condition that has either been input by the user using the user interface 106, or mobile device 111, or loaded from the memory 107, or downloaded from the cloud service 108. Where the desired condition is not met the food processing program generates instructions that the processor 101 transmits to actuator 105 in order to achieve the desired food/tool condition.

In an example process, where the user inputs instructions into the user interface 106 requesting high-speed blending at 35,000 RPM, and where strain-gauge feedback from the sensors 102 received by the processor 101 indicates that axial strain on the tool 104 (in this case a bladed tool) is beyond a maximum tolerance loaded from memory 107 (or mobile device 111, or cloud service 109), the processor 101 then instructs actuator 105 to reduce the angle of attack of the blades of tool 1 04. The angle of attack of the blades is then reduced until feedback data indicates that axial strain is back within tolerance.

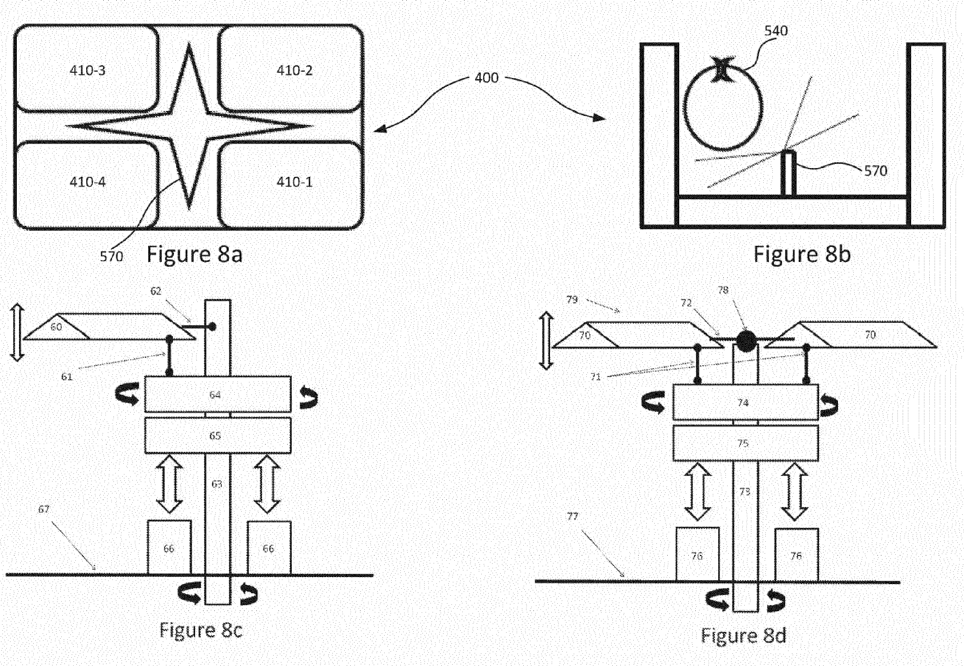

A detailed demonstration of this breaking up of lumps is shown in Figs. 8a and b, where a rotary tool 570 is located within a food processing container, the base of which has multiple load sensors 410 for detecting the load above them. These load sensors 410 may be pressure pads using *e*.*g*., force-sensitive resistors. When the load sensors 410 detect more load in a given location of the food container (e.g., when food item 540 is located above one of the load sensors 410), the rotary tool 570 is controlled to tilt towards that location. Once the load sensors 410 detect an even load (within a given tolerance) processing may cease, or instead switch to a high-speed mode.

In yet another example, the food processor 400 receives instructions indicating a desired average food-particle size, configures the tool 570 to achieve this desired result by *e.g.* changing the angle-of-attack and/or rotational speed of the tool, causes processing to begin, and then continues processing until sensor data - such as from the load cells 410 - indicates that the desired result has been achieved. For example, this can be determined from the load distribution since more finely commuted foodstuff can be distributed more evenly.

In some circumstances the sensors 102 may be omitted. For example the processor 101
may directly vary the pitch of the blades of the tool 104 in response to instructions input by the user to process a user-identified substance at a desired speed into a user interface 106 in accordance with a known relationship stored on memory 107 (or alternatively mobile device 111 or cloud 109) between rotational speed, blade-pitch, and axial strain within the substance being processed (e.g., orange juice) so as to avoid the possibility of excessive strain. In another example, the processor 101 drives the actuator 105 to periodically vary the tilt of the tool 104 so as to pre-empt vortex formation. In a further example, the user may select a program (either directly, or by indicating that an amount of food of a given type is to be processed to achieve a desired result, for which a program is then generated) containing variations over time of rotary speed, tool-pitch, shaft-flexibility, tool-tilt, and other variations in geometry of the tool 104, for the processor 101 to execute.

The way in which tool tilt is varied is shown in Figure 8c, in relation to which Figure 8c specifically shows an embodiment in which a tool (blade 60) is hingedly connected to the rotating shaft 63 so as to permit tilting of the blade 60. Blade 60 is hingedly connected to a tilt-control rod 61, which is hingedly connected to rotating swashplate 64, which contacts non-rotating swashplate 65. Non-rotating swashplate 65 is connected to mechanical actuators 66 which are supported by surface 67.

In operation non-rotating swashplate 65 is tilted by mechanical actuators 66 to a desired angle by raising one side of the non-rotating swashplate 65 and lowering the other side. This tilt is then communicated to rotating swashplate 64 through its contact with non-rotating swashplate 65, which drives the tilt-control rod 61 to push the blade 60 to tilt so as to conform to the tilt of the non-rotating swashplate 65, tilting upwardly along that part of its rotation corresponding to the raised part of the non-rotating swashplate 65, and downwardly along that part of its rotation corresponding to the lowered part of the non-rotating swashplate 65. Alternatively the mechanical actuators 66 may raise or lower the non-rotating swashplate 65 to tilt the blade 60 upwardly or downwardly throughout its rotation. To aid in the communication of tilt between non-rotating swashplate 65 and rotating swashplate 64, rotating swashplate 65 may be urged towards non-rotating swashplate 65 by a helical spring or other resilient element.

Whilst a hinged joint between the blade 60 and the rotating shaft 63 is used to achieve tilting of the blade 60 in the above example, other joints capable of achieving a tilting effect may also be used. These include universal joints and ball joints. An example of such an arrangement is shown in Fig. 8d, where a rotary tool 79 having tool-elements 70 attached to a central ball-joint 78 by rigid connectors 72 is formed on the end of the rotating shaft 73 is used. The ball-joint 78 fixed to the end of the shaft 73 by a suitable connection (e.g., ball-and-socket connection, or the shaft 73 partially surrounding/encasing the bottom, sides, and top of ball-joint 78 so as to prevent its escape but still permit rotary movement) allowing movement within a given arc. The ball-joint 78 is constrained to rotate with the rotating shaft 73, and the tool-elements 70 of the rotary tool 79 are rigidly connected to the ball-joint 78 by connectors 73 so that the rotary tool 79 as a whole pivots about its ball joint 78. The tilt of the tool assembly 78 can be varied by actuators 76 on surface 77 driving the non-rotating swashplate 75 to assume a desired tilt, which is then communicated to rotating swashplate 74 which in turns pushes push-rods 71 (which may be telescoping within a limited range to give sufficient play for their task) to push the rotary tool 79 to assume a desired tilt. Whilst the rigid construction of rotary tool 79 prevents (absent additional actuation means and hinging of the tool elements) independent movement of tool elements 70, it is advantageous in that it creates a stronger, more simple and easier to manufacture structure.

Whilst tool pitch and tilt are varied using the above control mechanisms, hinged rotary tools driven by a shaft may be driven so as to vary their sweep (i.e., moved to incline forwards/backwards in the direction of rotation) by a similar actuator and push-rod arrangements to achieve a larger or smaller working area or bring the blades closer together or further away from each other.

To provide more than one variable geometry functionality at the same time (e.g., variable pitch and variable tilt) multiple swashplate arrangements may be arranged concentrically and the join between the blade and the shaft made fully-articulated. Whilst annular swashplates have been used for exemplary purposes here, the swashplates may be of different shapes including square. Either one of the non-rotating swashplate and the rotating swashplate may be replaced by a mechanical element such as e.g., smoothended pistons. The meeting point between the swashplates may be suitably lubricated to prevent wear, using, for example, suitable oils and/or ball bearings. The swashplates are preferably made of a hard-wearing material such as stainless steel.

It is desirable to provide an intelligent control system that can respond dynamically to conditions within a food processor to achieve desired food-processing outcomes by dynamically varying the geometry of the rotary tool, including by varying the flexibility of the shaft, the bending/flexing direction of the shaft, tool-pitch, and tool-tilt using any of the above-discussed control mechanisms.

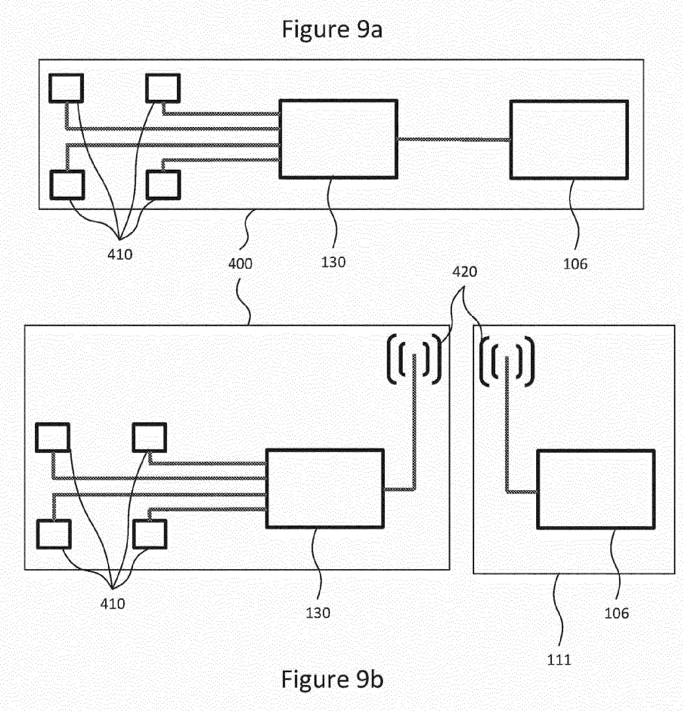

As shown in Figure 9, the kitchen appliances 400 described above are provided with a user interface and control interface 106, either on the kitchen appliance itself (as shown in Figure 9a) and/or on a peripheral device 111 via dedicated means for communication 420 (such as for Bluetooth, WiFi, NFC, *etc*.)*.* In this way, any of the following are available to be communicated to the user: error messaged; user tips and coaching instructions; and status information, including weight of contents, vibration status, the tool, if any, that is presently attached weight distribution, tool rotation speed, *etc.*

In order to incorporate more than two load cells into in a kitchen appliance so as to facilitate, or to improve, some of the aforementioned functions, it may be required to provide load cells that are small in dimension, since acceptable dimensions of the kitchen appliance are generally capped.

As a consequence of using compact load cells, the calibrated hole (or cut-out) of the load cell may be elongated and/or the thickness of material above and/or below the calibrated hole of the load cell can be reduced, thus making the bar more sensitive to weight-changes, but the bar may bend further, possibly past its elastic limit. As a result of using more compact load cells, the durability and/or maximum load capacity of the load cells may be reduced.

To mitigate the impact on durability of using compact load cells, a self-protecting arrangement is provided to safeguard load cells from over-bend.

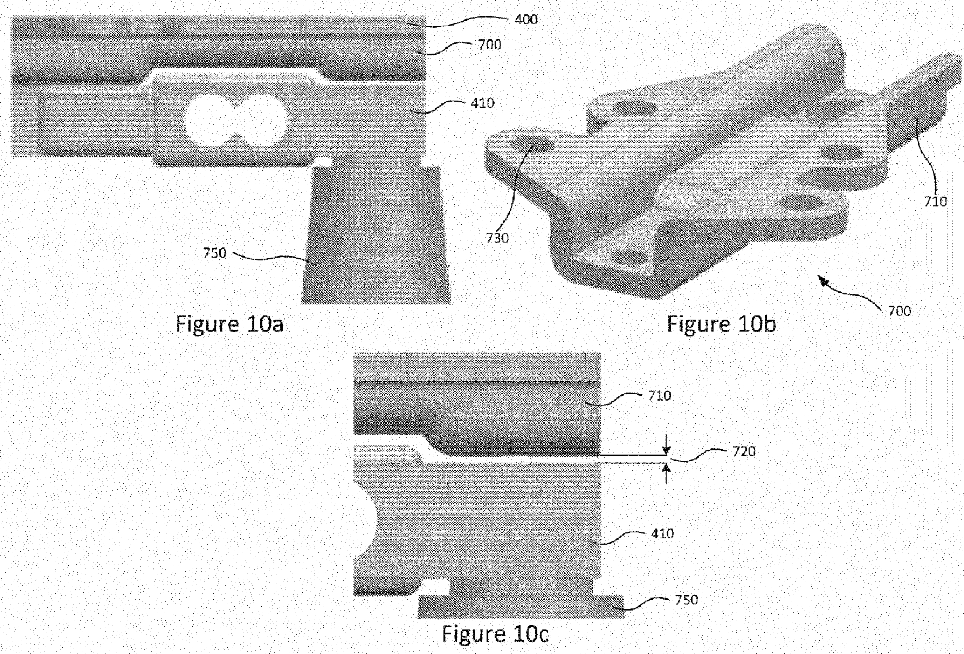

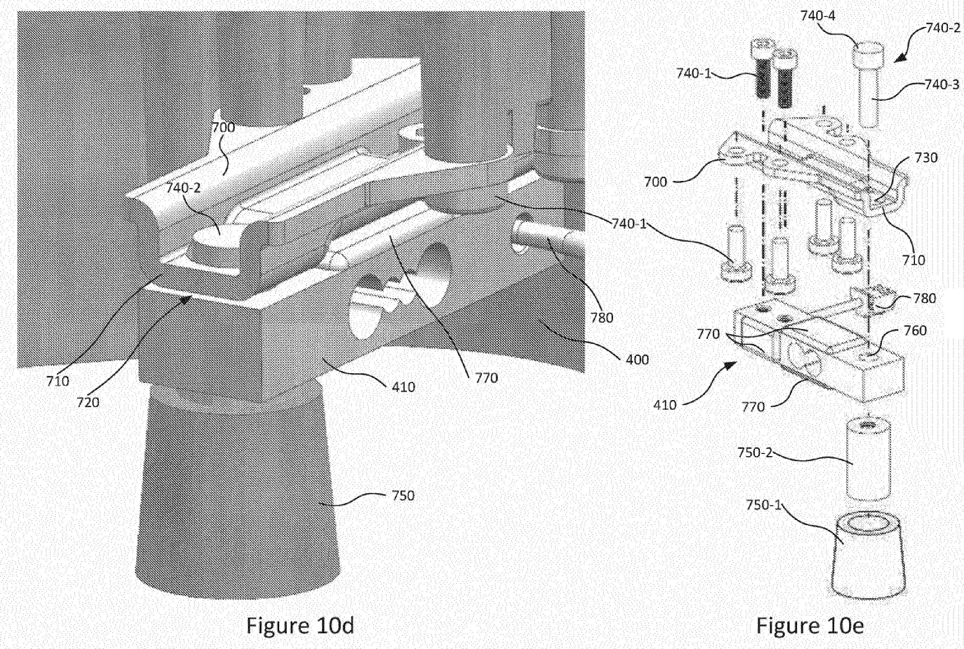

As shown in Figures 10, a rigid pressing 700, comprising a travel limiter 710, is provided to prevent the load cell 410 from bending past its elastic limit and from causing damage to its component strain gauge(s).

A protection gap 720 is provided between the load cell 410 and the travel limiter 710 to allow the load cell 410 to deform, from which deformation load is derived. By providing the travel limiter 710 the extent of deformation of the load cell is limited. To prevent over-bend, the load cell is stopped by the travel limiter from bending any further. The size of the protecting gap is dimensioned so as to prevent the load cell from bending past its elastic limit, and preferably has at least a 5% to 30% safety margin, and more preferably 10% to 20%, so as to account for manufacturing defects, fatigue and varying conditions.

As described with reference to Figure 4, the load cells 410 are arranged at each of the (four) corners of the base of the food appliance. Each load cell is coupled to the kitchen appliance 400 via the rigid pressing 700. To achieve this, the rigid pressing is provided with apertures 730 for coupling (for example via a bolt 740-1) the rigid pressing to the base of the kitchen appliance and also to the load cell. The load cell is then connected, at a free end, to a supporting rubber foot 750 of the kitchen appliance. The free end of the load cell is available to be displaced as the load cell is deformed, and the free end is arranged directly below the travel limiter 710.

As best seen in Figures 10d and 10e, the load cell 410 is provided with a plurality of strain gauges 770. The load cell comprises a connector 780 for feeding readings from the load cell to the controller 130. To measure vertical flexing of the load cell, strain gauges are provided on an upper (towards the kitchen appliance) and a lower (towards the foot) surface of the load cell. So as not to interfere with flexing of the load cell, the rigid pressing 700 is recessed proximate to the strain gauge 770 on the upper surface, so as to accommodate this strain gauge.

As shown in Figures 10d and 10e, a bolt 740-2 extends through the load cell 410 (specifically through an aperture 760 on the free end of the load cell) and either through the rigid pressing (specifically, through a corresponding aperture 730 on the travel limiter 710) or at least into a recess of the rigid pressing 700. The bolt 740-2 is threaded, thereby to form a threaded engagement with the foot 750. A small clearance gap is provided between at least the periphery of the bolt 740-2 and the rigid pressing (specifically the aperture 730 through which the bolt 740-2 passes) to permit vertical flexing of the load cell 410 in a vertical direction for measuring load. This advantageously prevents excessive (if any) horizontal bending of the load cell caused by, for example, the appliance being slid across a surface, as horizontal bending of the load cell 410 would bring the head of the bolt 740-4 into contact with the rigid pressing 700 (specifically its aperture 730), thus preventing further (if any) horizontal bending.

In more detail, this is achieved by providing an aperture 730 for the bolt 740-2 that is oversized relative to the shank 740-3 of the bolt 740-2, that is the aperture is oversized in the sense that it is not a snug fit into the aperture 730, but there is a clearance that is a substantial proportion of the diameter of the shank of the bolt, that proportion being at least 10%, and preferably at least 5%.

The flange formed at the head 740-4 of the bolt 740-2 is dimensioned so as to be wider than the aperture 730 in the rigid pressing 700 through which the bolt extends to prevent the bolt 740-2 being removed entirely from the rigid pressing 700 by, for example, the load cell 410 flexing downwardly during removal of the appliance 410 from a surface to which it is stuck (e.g. because the surface is sticky, or because the foot 750 is attached to a surface by a sucker).

The bolt 740-2 is not fastened to the rigid pressing 700.

In an alternative example, the shank of the bolt 740-2 is not threaded and it is therefore not fastened to the travel limiter, nor to the foot. The bolt therefore acts as a pin coupling preventing relative lateral movement of the foot, load cell and travel limiter (without impeding relative vertical movement of the free end of the load cell towards the travel limiter and/or foot 750).

As shown in Figure 10e, the foot 750 comprises a core 750-2 and a cover 750-1. The core 750-2 comprises a recess for receiving the bolt 740-2. When the bolt is threaded, the recess in the core comprises complementary threads for engaging with the bolt. The core is rigid, so to soften impacts the core 750-2 is covered with a cover 750-1. The cover is soft (relative to the core) and elastic so as to absorb shocks. The cover is, for example, formed from rubber. The cover 750-1 elastically fits over and around the core.

By using compact load cells, the design has the advantage that it does not require load cells to be coupled to - by being bridged across - pairs of feet 750.

Each load cell 410 is, preferably, provided to accept up to 3Kg to 7Kg, and more preferably up to 6Kg.

Throughout, the measure of weight from the load cell is indicated to a user so that the kitchen appliance can function as a weighing scale.

Whilst the kitchen appliances shown in the figures and described above comprise two or four load cells, any number of load cells - or, more generally, sensors for sensing weight - are provided. Generally, accuracy and spatial resolution of load distribution is improved with increasing number of load cells.

As a further alternative, a load cell is replaced by a single dedicated sensor. For example, vibration is sensed using a dedicated vibration sensor (such as at least one accelerometer), rather than with multiple load cells.

In addition to measurements from the load cells, current detection within the motor is also used to sense and adapt to unbalanced loads within the kitchen appliance.

The self-protecting arrangement shown - and described with reference to - in Figures 10 is available to be used in any device with a weighing functionality, and not simply kitchen appliances for processing food. In addition, Instead of rubber feet 750, the load cell may be coupled to - or formed integrally - with sucker-pads.

The aforementioned features are to be applied to any kitchen appliance for food, including: stand mixers, food processors, food blenders, juicers, choppers, beverage makers, automated cooking devices, and so on.

Where blending is used as an example of a food processing activity above, other food processing activities can be carried out (using suitable tools) including: beating; whisking; mixing; folding; stirring; *etc.*

It will be understood that the present invention has been described above purely by way of example, and modifications of detail can be made within the scope of the invention.

Each feature disclosed in the description, and (where appropriate) the claims and drawings may be provided independently or in any appropriate combination.

Reference numerals appearing in the claims are by way of illustration only and shall have no limiting effect on the scope of the claims.

Aspects of the invention are also set out in the following numbered clauses:
1. A kitchen appliance for processing food, comprising:
   a load sensor for measuring load by means of its deformation, the load sensor supporting the kitchen appliance; and
   a travel limiter for preventing deformation of the load sensor beyond a pre-determined limit.
2. A kitchen appliance according to clause 1, wherein the travel limiter is fixed relative to the kitchen appliance.
3. A kitchen appliance according to clause 1 or 2, wherein the load sensor is arranged below the travel limiter.
4. A kitchen appliance according to any preceding clause, wherein the travel limiter is spaced apart from the load sensor.
5. A kitchen appliance according to any preceding clause, further comprising means for preventing lateral deformation of the load sensor relative to the travel limiter, preferably wherein the means couples the load cell to the travel limiter, and more preferably wherein the means is fastened to the load sensor (but preferably not fastened to the travel limiter).
6. A kitchen appliance according to clause 5, wherein the travel limiter includes an aperture, and the means for preventing lateral deformation of the load sensor is a pin that passes through said aperture.
7. A kitchen appliance according to clause 5 or 6, wherein the load sensor includes an aperture, wherein the means for preventing lateral deformation of the load sensor is a pin that passes through said aperture.
8. A kitchen appliance according to clause 6 or 7, wherein the aperture(s) of the load cell and/or travel limiter is oversized relative to the pin so as not to inhibit deformation of the load cell in the direction of the pin, preferably the direction of the pin being a vertical direction.
9. A kitchen appliance according to any preceding clause , wherein the kitchen appliance further comprises a foot fastener for fastening the load cell to a foot for supporting the kitchen appliance,
10. A kitchen appliance according to clause 9, wherein the foot fastener is the means for preventing lateral deformation of the load cell.
11. A kitchen appliance according to clause 9 or 10, wherein the travel limiter forms part of a protective member that is coupled to the kitchen appliance, and wherein the protective member comprises a fastener for fastening to the kitchen appliance.
12. A kitchen appliance according clause 11, wherein the load sensor comprises a fastener for fastening to the protective member.
13. A kitchen appliance according to any of clauses 9 to 12, wherein the foot fastener comprises a flange for preventing removal of the foot fastener from the travel limiter, and preferably from the aperture on the travel limiter.
14. A kitchen appliance according to any of clauses 9 to 13, wherein the foot fastener is spaced apart, along the length of the load cell, from the fastener for fastening the load cell to the travel limiter.
15. A kitchen appliance according to any of clauses 11 to 14, wherein the travel limiter is a protrusion of the protective member.
16. A kitchen appliance according to clause 15, wherein the protective member comprises a further protrusion distal to the travel limiter.
17. A kitchen appliance according to clause 16, wherein the further protrusion protrudes further than the travel limiter, preferably in a downward direction.
18. A kitchen appliance according to clause 16 or 17, wherein the further protrusion is in contact with the load cell at a location distal to the travel limiter.
19. A kitchen appliance according to any preceding clause, wherein the kitchen appliance comprises a foot, wherein the load sensor is fastened to only one foot, preferably by means only of the means for preventing lateral deformation of the load cell.
20. An apparatus for a kitchen appliance for processing food, said appliance having a motor, comprising:
   a sensor for sensing the weight of the kitchen appliance; and
   a controller for controlling the motor in dependence on the weight sensed by the sensor.
21. An apparatus according to clause 20, wherein the controller controls the speed of the motor in dependence on the weight sensed by the sensor.
22. An apparatus according to clause 20 or 21, wherein the controller controls the direction of the motor in dependence on the weight sensed by the sensor.
23. An apparatus according to any of clauses 20 to 22, wherein the controller controls the motor in dependence on absolute weight as sensed by the sensor.
24. An apparatus according to clause 23, wherein the controller increases the motor output as the absolute weight as sensed by the sensor increases, and decreases the motor output as such sensed weight decreases.
25. An apparatus according to any of clauses 20 to 24, wherein the controller controls the motor in dependence on changes in weight as sensed by the sensor.
26. An apparatus according to clause 25, wherein the controller increases the motor output as change in weight as sensed by the sensor increases, and decreases the motor output as such sensed change in weight decreases.
27. An apparatus according to any of clauses 20 to 26, further comprising a mechanical actuator for adjusting the flexibility and/or tilt of a tool coupled to the motor, wherein the controller controls the mechanical actuator in dependence on the weight sensed by the sensor.
28. An apparatus according to any of clauses 20 to 27, wherein the controller is configured to prevent operation of the motor when the weight of the kitchen appliance is less than and/or when the weight of the kitchen appliance is more than a pre-determined level.
29. An apparatus according to any of clauses 20 to 28, wherein the sensor is a weight distribution sensor, and wherein the controller controls the motor in dependence on the weight distribution sensed by the sensor.
30. An apparatus according to clause 29, wherein the controller is configured to change the operation of the motor when the sensor senses an uneven weight distribution.
31. An apparatus according to any of clauses 20 to 30, wherein the controller is configured to prevent operation of the motor when the sensor senses an uneven weight distribution.
32. An apparatus according to any of clauses 20 to 31, wherein the controller is configured to change direction and/or speed of the motor when the sensor senses an uneven weight distribution.
33. An apparatus according to any of clauses 20 to 32, wherein the controller is configured to change direction and/or speed of the motor when the sensor senses an even weight distribution.
34. An apparatus according to any of clauses 20 to 33, wherein the sensor supports the weight of the kitchen appliance.
35. An apparatus according to any of clauses 20 to 34, wherein the controller is arranged to time-average readings from the sensor.
36. An apparatus according to any of clauses 20 to 35, wherein the sensor senses weight when the motor is not in operation.
37. An apparatus according to any of clauses 20 to 36, wherein the sensor continuously senses weight.
38. An apparatus according to any of clauses 20 to 37, wherein the sensor is one of: a load cell; a pressure sensor; an inclination sensor; and/or a displacement sensor.
39. An apparatus according to any of clauses 20 to 38, comprising at least two sensors.
40. A kitchen appliance for processing food comprising an apparatus according to any of clause 20 to 39.
41. An apparatus for a kitchen appliance for processing food, said appliance having a motor, comprising:
   a variable-geometry tool assembly for a kitchen appliance, comprising a rotary tool with at least one tool element and an axle from which the tool derives rotary drive, and at least one of the rotary tool, the tool element, and the axle comprises a configuration the geometry of which is variable during use of the tool;
   a control element arranged to act upon the variable geometry configuration during use of the tool to constrain the variable geometry;
   a plurality of sensors for sensing the load distribution of the kitchen appliance; and
   a controller for controlling the speed of the motor and the control element in dependence on the load distribution sensed by the sensors.
42. An apparatus according to clause 41, wherein the axle comprises a flexing member, and the control element comprises a resilient element configured to bias the flexing member towards the axis of rotation, such as a helical spring surrounding the flexing member.
43. An apparatus according to clause 41 or 42, wherein at least one of the tilt, sweep, and pitch of the at least one tool element is variable relative to an axis of rotation of the axle, and the control element comprises at least one mechanical actuator.
44. An apparatus according to any of clauses 41 to 43, wherein the sensors are pressure pads, for example using force-sensitive resistors.
45. An apparatus according to any of clauses 41 to 44, wherein the controller is configured to cease the motor or to switch the motor to a high-speed mode once the load sensors detect an even load, preferably within a given tolerance.
46. An apparatus for vibration control in a kitchen appliance for processing food, said appliance having a motor, comprising:
   a vibration sensor comprising three individual sensors, and preferably wherein the position of the individual sensors is non-collinear.
47. An apparatus according to clause 46, further comprising a controller for controlling the motor so as to control vibration in dependence on vibrations detected by the vibration sensor.
48. An apparatus for vibration control in a kitchen appliance for processing food, said appliance having a motor, comprising:
   a vibration sensor for detecting vibration of the kitchen appliance; and
   a controller for controlling the motor so as to control vibration in dependence on vibrations detected by the vibration sensor.
49. An apparatus according to clause 47 or 48, wherein the controller and the vibration sensor are in communication so as to form a feedback loop for controlling the motor so as to control vibration of the kitchen appliance.
50. An apparatus according to any of clauses 47 to 49, wherein the controller is for controlling the motor in dependence on vibrations detected by the vibration sensor whereby to reduce vibration of the kitchen appliance.
51. An apparatus according to any of clauses 47 to 50, wherein the controller is for controlling the motor in dependence on vibrations detected by the vibration sensor whereby to increase vibration of the kitchen appliance.
52. An apparatus according to any of clauses 47 to 51, wherein the apparatus is for a kitchen appliance that is free standing.
53. An apparatus according to any of clauses 47 to 52, wherein the apparatus is for a counter-top kitchen appliance.
54. An apparatus according to any of clauses 47 to 53, wherein the vibration sensor is configured to detect direction of vibration.
55. An apparatus according to any of clauses 47 to 54, wherein the vibration sensor is configured to detect magnitude of vibration.
56. An apparatus according to any of clauses 47 to 55, wherein the vibration sensor is configured to detect frequency of vibration.
57. An apparatus according to any of clauses 47 to 56, wherein the controller controls the torque of the motor in dependence on the vibration detected by the vibration sensor.
58. An apparatus according to any of clauses 47 to 57, wherein the controller controls the direction of the motor in dependence on the vibration detected by the vibration sensor.
59. An apparatus according to any of clauses 47 to 58, wherein the controller controls the frequency of rotation of the motor in dependence on the vibrations detected by the vibration sensor.
60. An apparatus according to any of clauses 47 to 59, further comprising means for adjusting the tilt of a tool driven by the motor controlled by the controller in dependence on the vibrations detected by the vibration sensor.
61. An apparatus according to any of clauses 47 to 60, wherein the vibration sensor is suitable for supporting the weight of the kitchen appliance.
62. An apparatus according to any of clauses 47 to 61, wherein the controller is arranged to average readings from the vibration sensor.
63. An apparatus according to any of clauses 47 to 62, wherein the vibration sensor comprises one of: a load cell; a pressure sensor; an inclination sensor; an accelerometer; and/or a displacement sensor.
64. An apparatus according to any of clauses 47 to 63, comprising at least two vibration sensors.
65. An apparatus according to clause 64, wherein the at least two vibration sensors are in the same plane.
66. An apparatus according to clause 64 or 65, wherein the at least two vibration sensors are spaced apart so as to position the at least two vibration sensors at or adjacent to peripheries of the kitchen appliance.
67. A kitchen appliance for processing food, comprising an apparatus for vibration control according to any of clauses 47 to 66.
68. An apparatus for detecting an attachment in a kitchen appliance for processing food, comprising:
   a sensor for sensing the weight of the kitchen appliance; and
   a controller configured to detect the presence of an attachment in the kitchen appliance in dependence on the weight sensed by the sensor.
69. An apparatus according to clause 68, wherein the controller is configured to identify the attachment based on the weight sensed by the sensor.
70. An apparatus according to clause 68 or 69, wherein the sensor is a weight distribution sensor, and wherein the controller is configured to detect the presence of an attachment in the kitchen appliance in dependence on the weight distribution.
71. An apparatus according to clause 70, wherein the controller is configured to identify the attachment based on the weight distribution sensed by the sensor.
72. An apparatus according to any of clauses 68 to 71, wherein the controller is configured to control the attachment in dependence on whether an attachment is detected.
73. An apparatus according to any of clauses 68 to 72, wherein the controller is configured to control the attachment in dependence on the type of tool identified.
74. An apparatus according to any of clauses 68 to 73, wherein the controller is configured to identify the attachment if it falls within a pre-determined range of weights.
75. An apparatus according to clause 74, wherein the size of the pre-determined range is larger for values above the weight of the attachment and smaller for values below the weight of the attachment.
76. An apparatus according to any of clauses 68 to 75, wherein the controller is arranged to control a safety interlock in dependence on whether an attachment is detected.
77. A safety interlock for a kitchen appliance for processing food, having a motor and an attachment for processing food, comprising:
   a sensor for sensing the weight of the kitchen appliance;
   a controller configured to control operation of the motor in dependence on the weight sensed by the sensor.
78. A safety interlock according to clause 77, wherein the sensor is a weight distribution sensor, and wherein the controller is configured to control operation of the motor in dependence on weight distribution sensed by the sensor
79. A safety interlock according to clause 77 or 78, wherein the controller prevents operation of the motor if the weight of the kitchen appliance is less than and/or greater than a predetermined level.
80. A safety interlock according to clause 79, wherein the controller prevents operation of the motor if the weight distribution of the kitchen appliance is significantly different to a predetermined distribution.
81. A safety interlock according to any of clauses 77 to 80, comprising at least two sensors, wherein the controller is arranged to prevent of the motor if the weight sensed from the at least two sensors substantially differs.
82. A kitchen appliance comprising an apparatus according to any of clauses: 20 to 40; 41 to 45; 46 to 47; 48 to 66; 68 to 76 and/or 77 to 81.
83. A kitchen appliance according to any of clause 1 to 19, comprising an apparatus according to any of clauses: 20 to 40; 41 to 45; 46 to 47; 48 to 66; 68 to 76 and/or 77 to 81.
84. A kitchen appliance substantially as herein described and/or substantially as herein shown in the Figures.
85. An apparatus substantially as herein described and/or substantially as herein shown in the Figures.
86. A safety interlock substantially as herein described and/or substantially as herein shown in the Figures.

## Claims

1. An apparatus for a kitchen appliance for processing food, said appliance having a motor, comprising:
a sensor for sensing the weight of the kitchen appliance; and
a controller for controlling the motor in dependence on the weight sensed by the sensor.

2. An apparatus according to Claim 1, wherein the controller controls the speed and/or direction of the motor in dependence on the weight sensed by the sensor, optionally on absolute weight sensed by the sensor.

3. An apparatus according to Claim 2, wherein the controller increases the motor output as the absolute weight as sensed by the sensor increases, and decreases the motor output as such sensed weight decreases.

4. An apparatus according to any of Claims 1 to 3, wherein the controller controls the motor in dependence on changes in weight as sensed by the sensor, preferably wherein the controller increases the motor output as change in weight as sensed by the sensor increases, and decreases the motor output as such sensed change in weight decreases.

5. An apparatus according to any of the preceding Claims, further comprising a mechanical actuator for adjusting the flexibility and/or tilt of a tool coupled to the motor, wherein the controller controls the mechanical actuator in dependence on the weight sensed by the sensor.

6. An apparatus according to any of the preceding Claims, wherein the controller is configured to prevent operation of the motor when the weight of the kitchen appliance is less than and/or when the weight of the kitchen appliance is more than a pre-determined level.

7. An apparatus according to any of the preceding Claims, wherein the sensor is a weight distribution sensor, and wherein the controller controls the motor in dependence on the weight distribution sensed by the sensor, preferably being
configured to change the operation of the motor when the sensor senses an uneven weight distribution, or when the sensor senses an even weight distribution.

8. An apparatus according to any of the preceding Claims, wherein the controller is configured to prevent operation of the motor when the sensor senses an uneven weight distribution.

9. An apparatus according to any of Claims 1 to 7, wherein the controller is configured to change direction and/or speed of the motor when the sensor senses an uneven weight distribution.

10. An apparatus according to any of the preceding Claims, wherein the sensor supports the weight of the kitchen appliance and/or comprising at least two sensors, and/or wherein the sensor is one of: a load cell; a pressure sensor; an inclination sensor; and/or a displacement sensor.

11. An apparatus according to any of the preceding Claims, wherein the controller is arranged to time-average readings from the sensor, and/or wherein the sensor senses weight when the motor is not in operation, and/or wherein the sensor continuously senses weight.

12. An apparatus as claimed in any of the preceding claims, comprising:
a vibration sensor comprising at least three individual weight sensors, and preferably wherein the position of the individual sensors is non-collinear, preferably
wherein the controller controls the motor so as to control vibration in dependence on vibrations detected by the vibration sensor, preferably whereby to reduce or increase vibration.

13. An apparatus according to Claim 12, wherein the controller and the vibration sensor are in communication so as to form a feedback loop for controlling the motor so as to control vibration of the kitchen appliance, preferably wherein the vibration sensor is configured to detect direction and/or magnitude and/or frequency of vibration, and/or wherein the controller controls the torque and/or direction and/or frequency of rotation of the motor in dependence on the vibration detected by the vibration sensor.

14. An apparatus according to Claim 12 or 13, comprising at least two vibration sensors, preferably wherein the at least two vibration sensors are in the same plane, and/or wherein the last at least two vibration sensors are at least two vibration sensors are spaced apart so as to position the at least two vibration sensors at or adjacent to peripheries of the kitchen appliance.

15. A kitchen appliance for processing food, comprising an apparatus according to any of the preceding Claims.
